(19) **Europäisches Patentamt European Patent Office Office européen des brevets**

(11) **EP 4 700 959 A1**

(12) **EUROPEAN PATENT APPLICATION**
published in accordance with Art. 153(4) EPC

(43) Date of publication:
**25.02.2026 Bulletin 2026/09**

(21) Application number: **23934395.7**

(22) Date of filing: **24.04.2023**

(51) International Patent Classification (IPC):
*H01M 50/40* (2021.01)     *H01M 50/449* (2021.01)
*H01M 50/457* (2021.01)

(52) Cooperative Patent Classification (CPC):
**H01M 50/40; H01M 50/449; H01M 50/457**

(86) International application number:
**PCT/CN2023/090389**

(87) International publication number:
**WO 2024/221190 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **WANG, Zhaoguang**
  **Ningde, Fujian 352100 (CN)**

• YANG, Jianrui
  **Ningde, Fujian 352100 (CN)**
• SUN, Chengdong
  **Ningde, Fujian 352100 (CN)**
• HUANG, Siying
  **Ningde, Fujian 352100 (CN)**
• WANG, Yaohui
  **Ningde, Fujian 352100 (CN)**
• OUYANG, Chuying
  **Ningde, Fujian 352100 (CN)**
• HAN, Chongwang
  **Ningde, Fujian 352100 (CN)**

(74) Representative: **Gong, Jinping**
**CocreateIP**
**Neumarkter Straße 21**
**81673 München (DE)**

(54) **SEPARATOR AND PREPARATION METHOD THEREFOR, SECONDARY BATTERY, AND ELECTRIC DEVICE**

(57)    Provided in the present application are a separator and a preparation method therefor, a secondary battery, and an electric device. The separator includes a first substrate, a second substrate, a first bonding layer, and a second bonding layer, where the first bonding layer is located between the first substrate and the second substrate, and the first bonding layer includes a first binder; and the second bonding layer is located on one side of the first substrate and/or the second substrate facing away from the first bonding layer, and the second bonding layer includes a second binder. If the thickness of the first bonding layer is denoted as T1 and the thickness of the second bonding layer is denoted as T2, the separator satisfies:

$$T1/T2 > 1.$$

**EP 4 700 959 A1**

**(Cont. next page)**

FIG. 1

**Description**

TECHNICAL FIELD

The present application relates to a separator and a preparation method therefor, a secondary battery, and an electric device.

BACKGROUND

In recent years, secondary batteries have been widely applied in energy storage power systems such as hydraulic, thermal, wind, and solar power plants, as well as in various fields of power tools, electric bicycles, electric motorcycles, electric vehicles, military equipment, aerospace, and so on. With the application and popularization of secondary batteries, the requirements for their use are also becoming increasingly stringent.

SUMMARY

The present application provides a separator and a preparation method therefor, a secondary battery, and an electric device, which aims to improve the cycle performance and energy density of the secondary battery.

In a first aspect of the present application, a separator is provided, including a first substrate, a second substrate, a first bonding layer, and a second bonding layer, where the first bonding layer is located between the first substrate and the second substrate, and the first bonding layer includes a first binder; and the second bonding layer is located on one side of the first substrate and/or the second substrate facing away from the first bonding layer, and the second bonding layer includes a second binder. If the thickness of the first bonding layer is denoted as $T1$ and the thickness of the second bonding layer is denoted as $T2$, the separator satisfies: $T1/T2 > 1$.

Without intending to be limited by any theory or explanation, in the structure of the separator provided in the present application, the first bonding layer can firmly combine the first substrate and the second substrate together, and improve the heat resistance of the separator; and the second bonding layer can improve the binding effect between the separator and an electrode sheet, and reduce a gap between the separator and the electrode sheet, thereby delaying the growth of lithium dendrites, and effectively improving the cycle performance of the battery. Under the design of a specific thickness ratio in the present application, the first bonding layer has a relatively large thickness, which is beneficial to improve the structural stability and heat resistance of the separator; and the second bonding layer has a relatively small thickness, which can ensure that the separator has a small overall thickness while a high binding force between the separator and the electrode sheet is ensured. Thus, when the separator in the present application is applied to a secondary battery, the secondary battery can achieve both good cycle performance and high energy density.

In any embodiment of the present application, $1.25 \leq T1/T2 \leq 5$. Optionally, $1.5 \leq T1/T2 \leq 4$. This can further improve the reliability and energy density of the secondary battery.

In any embodiment of the present application, the thickness $T1$ of the first bonding layer is less than or equal to 4 $\mu$m. Optionally, the thickness $T1$ of the first bonding layer is 0.5 $\mu$m to 3 $\mu$m.

In any embodiment of the present application, the thickness $T2$ of the second bonding layer is less than or equal to 2 $\mu$m. Optionally, the thickness $T2$ of the second bonding layer is 0.4 $\mu$m to 1.5 $\mu$m.

When the thickness of the first bonding layer and/or the thickness of the second bonding layer falls within the given range, the separator can achieve both high heat resistance and a small thickness, and a high binding force can be formed between the separator and the electrode sheet, thereby further improving the reliability and energy density of the secondary battery.

In any embodiment of the present application, the total thickness $T$ of the separator is less than 12 $\mu$m. Optionally, the total thickness $T$ of the separator is 3 $\mu$m to 10 $\mu$m. This can effectively increase the energy density of the secondary battery.

In any embodiment of the present application, the thickness of the first substrate is less than or equal to 9 $\mu$m. Optionally, the thickness of the first substrate is 3 $\mu$m to 6 $\mu$m.

In any embodiment of the present application, the thickness of the second substrate is less than or equal to 8 $\mu$m. Optionally, the thickness of the second substrate is 1 $\mu$m to 5 $\mu$m.

When the thickness of the first substrate and/or the thickness of the second substrate falls within the above range, the heat resistance of the separator can be enhanced, and the high-temperature cycle performance and reliability of the battery can be effectively improved.

In any embodiment of the present application, the melting point of the first substrate is lower than the melting point of the second substrate.

In any embodiment of the present application, the melting point of the first substrate is 120°C to 280°C. Optionally, the melting point of the first substrate is 130°C to 260°C.

In any embodiment of the present application, the melting point of the second substrate is 160°C to 370°C. Optionally, the melting point of the second substrate is 170°C to 350°C.

When the melting point of the first substrate and/or the melting point of the second substrate falls within the above range, the secondary battery can achieve both good cycle performance and high reliability.

In any embodiment of the present application, the porosity of the first substrate is lower than the porosity of the second substrate.

In any embodiment of the present application, the porosity of the first substrate is 30% to 70%. Optionally, the porosity of the first substrate is 35% to 55%.

In any embodiment of the present application, the porosity of the second substrate is 35% to 85%. Optionally, the porosity of the second substrate is 40% to 75%.

By adjusting the porosity of the first substrate and/or the porosity of the second substrate to fall within the above range, it is helpful to improve the cycle performance, kinetic performance, etc. of the secondary battery.

In any embodiment of the present application, the puncture strength of the first substrate is higher than the puncture strength of the second substrate.

In any embodiment of the present application, the puncture strength of the first substrate is 200 gf to 450 gf. Optionally, the puncture strength of the first substrate is 230 gf to 420 gf.

In any embodiment of the present application, the puncture strength of the second substrate is 100 gf to 220 gf. Optionally, the puncture strength of the second substrate is 120 gf to 180 gf.

This is beneficial to reducing the risk of the separator being punctured by lithium dendrites or being punctured under mechanical impact, thereby further improving the reliability of the secondary battery.

In any embodiment of the present application, the transverse elongation at break of the first substrate is higher than the transverse elongation at break of the second substrate.

In any embodiment of the present application, the longitudinal elongation at break of the first substrate is lower than the longitudinal elongation at break of the second substrate.

In any embodiment of the present application, the transverse elongation at break of the first substrate is 50% to 220%, optionally 80% to 170%.

In any embodiment of the present application, the longitudinal elongation at break of the first substrate is 30% to 100%, optionally 40% to 85%.

In any embodiment of the present application, the transverse elongation at break of the second substrate is 40% to 200%, optionally 60% to 160%.

In any embodiment of the present application, the longitudinal elongation at break of the second substrate is 50% to 700%, optionally 80% to 600%.

By adjusting the longitudinal elongation at break and/or the transverse elongation at break of the first substrate and/or the second substrate to fall within the above range, it is beneficial to improve the ductility and strength of the separator, thereby facilitating the improvement of the production yield and reliability of the secondary battery.

In any embodiment of the present application, the first binder and/or the second binder each independently includes one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl amylopectin.

In any embodiment of the present application, the second bonding layer includes a second binder different in material from the first binder.

In any embodiment of the present application, the first binder includes polyacrylate.

In any embodiment of the present application, the second binder includes polyvinylidene fluoride (PVDF).

In any embodiment of the present application, the second binder includes both polyvinylidene fluoride (PVDF) and polyacrylate.

In any embodiment of the present application, the content of the first binder is less than or equal to 30%, optionally less than or equal to 20%, based on the total mass of the first bonding layer.

In any embodiment of the present application, the content of the second binder is greater than or equal to 85%, optionally greater than or equal to 90%, based on the total mass of the second bonding layer.

In any embodiment of the present application, the first binder and/or the second binder includes an aqueous binder.

The first bonding layer can endow the separator with good heat resistance on the basis of ensuring the binding strength and uniformity of the first substrate and the second substrate, thereby improving the reliability of the secondary battery. The second bonding layer can increase the binding force between the separator and the electrode sheet, and reduce the gap between the separator and the electrode sheet, thereby delaying the growth of lithium dendrites, and further improving the cycle performance of the battery.

In any embodiment of the present application, the material of the first substrate includes at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

In any embodiment of the present application, the material of the second substrate includes at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

In any embodiment of the present application, the first bonding layer further includes a filler.

In any embodiment of the present application, the filler includes at least one of inorganic particles, organic particles, and an organic-metal framework material.

Optionally, the content of the filler is less than or equal to 90%, optionally 30% to 85%, based on the total mass of the first bonding layer.

In any embodiment of the present application, the volume distribution particle diameter Dv50 of the filler is 0.05 $\mu$m to 1.2 $\mu$m, optionally 0.2 $\mu$m to 0.8 $\mu$m.

Optionally, the specific surface area of the filler is 4 $g/m^2$ to 12 $g/m^2$, optionally 6 $g/m^2$ to 9 $g/m^2$.

The filler can further improve the heat resistance and physical properties (such as tensile strength and puncture strength) of the separator, thereby improving the reliability of the secondary battery.

In any embodiment of the present application, the transverse tensile strength of the separator is greater than or equal to 600 $kg/cm^2$, optionally 800 $kg/cm^2$ to 2,500 $kg/cm^2$.

Optionally, the longitudinal tensile strength of the separator is greater than or equal to 800 $kg/cm^2$, optionally 1,000 $kg/cm^2$ to 3,000 $kg/cm^2$.

Optionally, the air permeability of the separator is 150 s/100cc to 500 s/100cc, optionally 180 s/100cc to 380 s/100cc.

Optionally, the transverse thermal shrinkage rate of the separator at 250°C for 1 h is less than or equal to 5%, optionally 0.05% to 3%.

Optionally, the longitudinal thermal shrinkage rate of the separator at 250°C for 1 h is less than or equal to 5%, optionally 0.05% to 3%.

When at least one of the transverse tensile strength, the longitudinal tensile strength, the air permeability, the transverse thermal shrinkage rate, and the longitudinal thermal shrinkage rate of the separator falls within the given range, the separator can achieve good heat resistance and physical properties, so that the stability of the secondary battery can be improved.

In a second aspect of the present application, a method for preparing the separator in the first aspect is provided, including the following steps: providing a first substrate, a second substrate, a slurry for a first bonding layer, and a slurry for a second bonding layer, where the slurry for the first bonding layer includes a first binder, and the slurry for the second bonding layer includes a second binder; applying the slurry for the first bonding layer onto one of the first substrate and the second substrate, followed by laminating with the other of the first substrate and the second substrate, thereby forming the first bonding layer between the first substrate and the second substrate; and applying the slurry for the second bonding layer onto a surface of the first substrate facing away from the first bonding layer, and/or applying the slurry for the second bonding layer onto a surface of the second substrate facing away from the first bonding layer, thereby obtaining the separator, where if the thickness of the first bonding layer is denoted as T1 and the thickness of the second bonding layer is denoted as T2, the separator satisfies: T1/T2 > 1.

Optionally, the slurry for the first bonding layer includes a first binder and a filler.

In a third aspect of the present application, a secondary battery is provided, including the separator in the first aspect.

In a fourth aspect of the present application, an electric device is provided, including the secondary battery in the third aspect of the present application.

The electric device in the present application includes the secondary battery provided in the present application, and thus has at least the same advantages as the secondary battery.

DESCRIPTION OF DRAWINGS

In order to more clearly illustrate the technical solutions in the embodiments of the present application, the accompanying drawings that need to be used in the embodiments of the present application are briefly described below. It is clear that the accompanying drawings described below show only some embodiments of the present application, and a person of ordinary skill in the art may further derive other accompanying drawings from the accompanying drawings without creative efforts.

FIG. 1 is a schematic diagram of an embodiment of a separator provided in the present application;

FIG. 2 is a schematic diagram of another embodiment of a separator provided in the present application;

FIG. 3 is a schematic diagram of yet another embodiment of a separator provided in the present application;

FIG. 4 is a schematic diagram of an embodiment of a secondary battery provided in the present application;

FIG. 5 is a schematic exploded view of an embodiment of a secondary battery provided in the present application;

FIG. 6 is a schematic diagram of an embodiment of a battery module provided in the present application;

FIG. 7 is a schematic diagram of an embodiment of a battery pack provided in the present application;

FIG. 8 is a schematic exploded view of the embodiment of the battery pack shown in FIG. 7; and

FIG. 9 is a schematic diagram of an embodiment of an electric device including a secondary battery provided in the present application as a power supply.

The drawings are not necessarily drawn to the actual scale. Reference signs are described as follows: 10-separator; 11-first substrate; 12-second substrate; 13-first bonding layer; 14-second bonding layer; 1-battery pack; 2-upper case body; 3-lower case body; 4-battery module; 5-secondary battery; 51-housing; 52-electrode assembly; and 53-cover plate.

DESCRIPTION OF EMBODIMENTS

Hereinafter, embodiments where a separator and a preparation method therefor, a secondary battery, and an electric device in the present application are specifically disclosed are described in detail appropriately with reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions, and it is conceivable that such technical solutions should be included in the application of the present application.

Unless otherwise specified, all technical solutions and optional technical solutions of the present application may be combined with each other to form new technical solutions, and it is conceivable that such technical solutions should be included in the application of the present application.

Unless otherwise specified, all steps in this application may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In the present application, terms "first", "second", etc. are used to distinguish different objects and not to describe a particular order or relation, unless otherwise specified.

In the present application, the terms "a plurality of" and "multiple types of" mean two or more.

Unless otherwise specified, the terms used in the present application have the meanings commonly understood by those skilled in the art.

Unless otherwise specified, the numerical values of each parameter mentioned in the present application can be determined by various test methods commonly used in the art, for example, according to the test methods in the example of the present application. The test temperature for each parameter is 25°C, unless otherwise specified.

Unless otherwise specified, all ratio parameters involved in the present application are compared under the condition that the units are the same. For example, when the thickness ratio of A to B is 1.2 : 1, the thickness units of A and B are the same.

## Separator

Generally, a secondary battery includes an electrode assembly and an electrolyte, where the electrode assembly includes a positive electrode sheet, a negative electrode sheet, and a separator, and the separator is disposed between the positive electrode sheet and the negative electrode sheet, and mainly functions to prevent a positive electrode and a negative electrode from being short-circuited.

The separator provided in the embodiment of the present application includes a first substrate, a second substrate, a first bonding layer, and a second bonding layer, where the first bonding layer is located between the first substrate and the second substrate, and the first bonding layer includes a first binder; and the second bonding layer is located on one side of the first substrate and/or the second substrate facing away from the first bonding layer, and the second bonding layer includes a second binder. If the thickness of the first bonding layer is denoted as T1 and the thickness of the second bonding layer is denoted as T2, the separator satisfies: T1/T2 > 1.

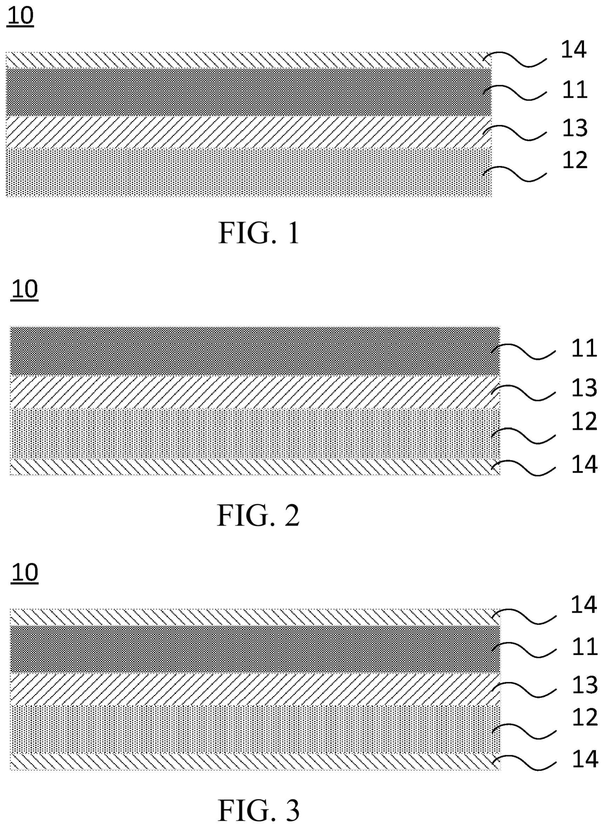

FIG. 1 is a schematic diagram of an embodiment of a separator in the present application. As shown in FIG. 1, the exemplary separator 10 includes a first substrate 11, a second substrate 12, a first bonding layer 13, and a second bonding layer 14. The first bonding layer 13 is located between the first substrate 11 and the second substrate 12, the second bonding layer 14 is disposed on one side of the first substrate 11 facing away from the first bonding layer 13, and the thickness T1 of the first bonding layer 13 is greater than the thickness T2 of the second bonding layer 14.

FIG. 2 is a schematic diagram of another embodiment of a separator in the present application. As shown in FIG. 2, the exemplary separator 10 includes a first substrate 11, a second substrate 12, a first bonding layer 13, and a second bonding layer 14. The first bonding layer 13 is located between the first substrate 11 and the second substrate 12, the second bonding layer 14 is disposed on one side of the second substrate 12 facing away from the first bonding layer 13, and the thickness T1 of the first bonding layer 13 is greater than the thickness T2 of the second bonding layer 14.

FIG. 3 is a schematic diagram of yet another embodiment of a separator in the present application. As shown in FIG. 3, the exemplary separator 10 includes a first substrate 11, a second substrate 12, a first bonding layer 13, and second bonding layers 14. The first bonding layer 13 is located between the first substrate 11 and the second substrate 12, the second bonding layers 14 are disposed on one side of the first substrate 11 facing away from the first bonding layer 13 and one side of the second substrate 12 facing away from the first bonding layer, and the thickness T1 of the first bonding layer 13 is greater than the thickness T2 of the second bonding layer 14.

Without intending to be limited by any theory or explanation, in the structure of the separator provided in the present application, the first bonding layer can firmly combine the first substrate and the second substrate together, and improve the heat resistance of the separator; and the second bonding layer can improve the binding effect between the separator and an electrode sheet, and reduce a gap between the separator and the electrode sheet, thereby delaying the growth of lithium dendrites, and effectively improving the cycle performance of the battery. Under the design of a specific thickness ratio in the present application, the first bonding layer has a relatively large thickness, which is beneficial to improve the structural stability and heat resistance of the separator; and the second bonding layer has a relatively small thickness, which can ensure that the separator has a small overall thickness while a high binding force between the separator and the electrode sheet is ensured. Thus, when the separator in the present application is applied to a secondary battery, the secondary battery can achieve both good cycle performance and high energy density.

In some embodiments, the thickness ratio of the first bonding layer to the second bonding layer may be 1.01, 1.05, 1.2, 1.25, 1.32, 1.46, 1.5, 1.58, 1.65, 1.67, 1.88, 1.91, 2.0, 2.05, 2.25, 2.32, 2.46, 2.56, 2.58, 2.67, 2.78, 2.91, 2.99, 3.05, 3.15, 3.25, 3.46, 3.56, 3.78, 3.88, 4.0, 4.05, 4.36, 4.98, 5.0, or a range formed by any two of the above values. For example, the thickness ratio of the first bonding layer to the second bonding layer may be selected from $1.01 \leq T1/T2 \leq 1.11$, $1.05 \leq T1/T2 \leq 1.20$, $1.10 \leq T1/T2 \leq 1.50$, $1.10 \leq T1/T2 \leq 1.86$, $1.10 \leq T1/T2 \leq 2.51$, $1.10 \leq T1/T2 \leq 3.04$, $1.25 \leq T1/T2 \leq 5.00$, $1.45 \leq T1/T2 \leq 3.70$, $1.50 \leq T1/T2 \leq 4.00$, $1.67 \leq T1/T2 \leq 2.50$, $1.75 \leq T1/T2 \leq 2.33$, $2.33 \leq T1/T2 \leq 2.50$, $2.50 \leq T1/T2 \leq 3.50$, $3.50 \leq T1/T2 \leq 4.00$, $3.30 \leq T1/T2 \leq 3.50$, $3.20 \leq T1/T2 \leq 3.60$, $1.75 \leq T1/T2 \leq 2.50$, $1.20 \leq T1/T2 \leq 1.46$, $1.32 \leq T1/T2 \leq 1.67$, $1.58 \leq T1/T2 \leq 2.05$, $2.25 \leq T1/T2 \leq 2.99$, $2.78 \leq T1/T2 \leq 3.15$, $3.46 \leq T1/T2 \leq 4.00$, $3.88 \leq T1/T2 \leq 4.36$, $4.05 \leq T1/T2 \leq 5.00$, and the like.

When the thickness ratio of the first bonding layer to the second bonding layer satisfies the above condition, the overall thickness of the separator can be further reduced while maintaining the heat resistance of the separator, thereby further improving the reliability and energy density of the secondary battery.

In some embodiments, the thickness T1 of the first bonding layer may be less than or equal to 4 μm, for example, 0.5 μm, 0.75 μm, 1 μm, 1.25 μm, 1.5 μm, 1.75 μm, 2 μm, 2.25 μm, 2.5 μm, 2.75 μm, 3 μm, 3.25 μm, 3.5 μm, 3.75 μm, 4 μm, or a range formed by any two of the above values. For example, the thickness of the first bonding layer may be selected from 0.5 μm to 4 μm, 0.5 μm to 3.25 μm, 0.5 μm to 2.75 μm, 0.5 μm to 2.5 μm, 1 μm to 4 μm, 1 μm to 3.25 μm, 1 μm to 2.75 μm, 1 μm to 2.5 μm, 1.75 μm to 3.75 μm, 1.75 μm to 3.25 μm, 2 μm to 4 μm, 2 μm to 3.75 μm, 2 μm to 3.5 μm, 2 μm to 3.25 μm, and the like.

Optionally, in some embodiments, the thickness T1 of the first bonding layer may also be 0.5 μm to 3 μm, 0.5 μm to 2.85 μm, 0.5 μm to 2.65 μm, 0.5 μm to 2.35 μm, 0.5 μm to 2 μm, 0.5 μm to 1.75 μm, 0.5 μm to 1.5 μm, 0.5 μm to 1 μm, 1 μm to 3 μm, 1 μm to 2.5 μm, 1 μm to 2 μm, 1 μm to 1.85 μm, 1 μm to 1.5 μm, 2 μm to 3 μm, 2 μm to 2.85 μm, 2 μm to 2.5 μm, or the like.

In some embodiments, the thickness T2 of the second bonding layer may be less than or equal to 2 μm, for example, 0.3 μm, 0.75 μm, 1 μm, 1.25 μm, 1.5 μm, 1.75 μm, 2 μm, or a range formed by any two of the above values. For example, the thickness of the second bonding layer may be selected from 0.3 μm to 2 μm, 0.3 μm to 1.75 μm, 0.3 μm to 1.5 μm, 0.3 μm to 1.25 μm, 0.3 μm to 1 μm, 0.75 μm to 2 μm, 0.75 μm to 1.75 μm, 0.75 μm to 1.5 μm, 0.75 μm to 1.25 μm, 1 μm to 2 μm, 1 μm to 1.75 μm, 1 μm to 1.5 μm, 1.25 μm to 1.75 μm, 1.75 μm to 2 μm, and the like.

Optionally, in some embodiments, the thickness T2 of the second bonding layer may also be 0.4 μm to 1.5 μm, 0.4 μm to 1.35 μm, 0.4 μm to 1.2 μm, 0.4 μm to 1 μm, 0.4 μm to 0.8 μm, 0.7 μm to 1.5 μm, 0.7 μm to 1.3 μm, 0.7 μm to 1.1 μm, 1 μm to 1.5 μm, 1 μm to 1.4 μm, 1 μm to 1.2 μm, 1.2 μm to 1.5 μm, or the like.

When the thickness of the first bonding layer and/or the thickness of the second bonding layer falls within the above range, the separator can achieve both high heat resistance and a small thickness, and a high binding force can be formed between the separator and the electrode sheet, thereby further improving the reliability and energy density of the secondary battery.

The thickness of the bonding layer has the meaning well-known in the art and may be tested using devices and methods known in the art. In some embodiments, a cross-sectional scanning electron microscope (SEM) image of the separator may be obtained by using a scanning electron microscope (for example, ZEISS Sigma 300) with reference to JY/T 0584-2020. As an example, the thickness of the bonding layer may be tested by the following method: a plurality of regions are randomly selected on the cross section of the separator, the thickness of the bonding layer is measured at least five times at a certain magnification, the measured values of different regions are counted, and the average value is taken as the thickness of the bonding layer.

In some embodiments, the total thickness T of the separator may be less than or equal to 12 μm, for example, 12 μm, 11.5 μm, 11 μm, 10.5 μm, 10 μm, 9.5 μm, 9 μm, 8.5 μm, 8 μm, 7.5 μm, 7 μm, 6.5 μm, 6 μm, 5.5 μm, 5 μm, 4 μm, 3 μm, or a range formed by any two of the above values. For example, the total thickness T of the separator may be 3 μm to 12 μm, 3 μm to 10 μm, 3 μm to 8 μm, 4 μm to 12 μm, 4 μm to 10 μm, 4 μm to 8 μm, 5 μm to 12 μm, 5 μm to 10 μm, 5 μm to 8 μm, 6 μm to 12 μm, 6 μm to 10 μm, 6 μm to 9 μm, 7 μm to 12 μm, 7 μm to 10 μm, or the like.

Under the design of a specific thickness ratio in the present application, the separator can achieve the above low overall thickness while achieving good heat resistance and high binding force with the electrode sheet. This can effectively increase the energy density of the secondary battery.

In some embodiments, the thickness of the first substrate may be less than or equal to 9 μm, for example, 1 μm, 1.2 μm, 1.7 μm, 2 μm, 2.3 μm, 2.6 μm, 2.9 μm, 3.2 μm, 3.5 μm, 3.8 μm, 4.1 μm, 4.4 μm, 4.7 μm, 5 μm, 5.3 μm, 5.6 μm, 5.9 μm, 6.2 μm, 6.5 μm, 6.8 μm, 7.1 μm, 7.4 μm, 7.7 μm, 8 μm, 8.3 μm, 8.7 μm, 9 μm, or a range formed by any two of the above values.

Optionally, in some embodiments, the thickness of the first substrate may also be 3 μm to 6 μm, for example, 3 μm, 3.2 μm, 3.5 μm, 3.7 μm, 4 μm, 4.2 μm, 4.5 μm, 4.7 μm, 5 μm, 5.2 μm, 5.5 μm, 5.7 μm, 6 μm, or a range formed by any two of the above values.

In some embodiments, the thickness of the second substrate may be less than or equal to 8 μm, for example, 1 μm, 1.3 μm, 1.6 μm, 1.9 μm, 2.2 μm, 2.5 μm, 2.8 μm, 3.1 μm, 3.4 μm, 3.7 μm, 4 μm, 4.6 μm, 5.2 μm, 5.8 μm, 6.4 μm, 7 μm, 7.2 μm, 7.6 μm, 8 μm, or a range formed by any two of the above values.

Optionally, in some embodiments, the thickness of the second substrate may also be 1 μm to 5 μm, for example, 3 μm, 3.2 μm, 3.5 μm, 3.7 μm, 4 μm, 4.2 μm, 4.5 μm, 4.7 μm, 5 μm, or a range formed by any two of the above values.

When the thickness of the first substrate and/or the thickness of the second substrate falls within the above range, the heat resistance of the separator can be enhanced, and the high-temperature cycle performance and reliability of the battery can be effectively improved.

The total thickness of the separator and the thickness of the substrate have the meanings well-known in the art and may be tested using devices and methods known in the art. For example, six groups of parallel samples can be taken, the thickness of each group of samples at different positions is measured by using a micrometer thickness gauge, at least 20 positions of each group of samples are measured, and the average value of the thicknesses of the six groups of samples is taken as the thickness of the sample.

In some embodiments, the melting point of the first substrate is lower than the melting point of the second substrate.

In some embodiments, the melting point of the first substrate may be 120°C to 280°C, for example, 120°C, 130°C, 135°C, 140°C, 150°C, 155°C, 160°C, 165°C, 170°C, 175°C, 180°C, 200°C, 220°C, 240°C, 260°C, 280°C, or a range formed by any two of the above values.

Optionally, in some embodiments, the melting point of the first substrate may also be 130°C to 260 °C, 140°C to 260°C, 150°C to 260°C, 160°C to 260°C, 170°C to 260 °C, 130°C to 200°C, 140°C to 200°C, 150°C to 200°C, 160°C to 200°C, 130°C to 180°C, 140°C to 180°C, 150°C to 180°C, 130°C to 150°C, 140°C to 150°C, or the like.

In some embodiments, the melting point of the second substrate may be 160°C to 370°C, for example, 160°C, 170°C, 180°C, 190°C, 200°C, 210°C, 220°C, 230°C, 240°C, 250°C, 260°C, 270°C, 280°C, 290°C, 300°C, 310°C, 320°C, 330°C, 340°C, 350°C, 360°C, 370°C, or a range formed by any two of the above values.

Optionally, in some embodiments, the melting point of the second substrate may also be 170°C to 350°C, 190°C to 350°C, 210°C to 350°C, 250°C to 350°C, 280°C to 350°C, 300°C to 350°C, 170°C to 320°C, 200°C to 320°C, 250°C to 320°C, 280°C to 320°C, 300°C to 320°C, 170°C to 300°C, 200°C to 300°C, 250°C to 300°C, 280°C to 300°C, or the like.

When the melting point of the first substrate and/or the melting point of the second substrate is controlled within the above range, the separator can achieve good heat resistance and physical properties. In addition, when the melting point of the first substrate and/or the melting point of the second substrate falls within the given range, the separator can also achieve good pore-closing properties, so that the separator not only can have good ion conductivity when the secondary battery works normally, but also can close pores in time when the secondary battery experiences thermal runaway, so as to block the conduction of a current. Thus, the secondary battery can achieve both good cycle performance and high reliability.

The melting point of the substrate has the meaning well-known in the art and may be tested using devices and methods known in the art. For example, the melting point may be tested using differential scanning calorimetry. Reference may be made in particular to the standard GB/T 19466.3-2004. As an example, the melting point of the sample may be tested by the following method: 4-6 mg of the sample to be tested is taken and placed in a sample chamber of a differential scanning calorimeter at a temperature from 25°C to 400°C with a temperature rise rate of 10°C/min, to obtain a melting heat adsorption curve of the sample, and the temperature corresponding to the peak of the curve is the melting point of the sample.

In some embodiments, the porosity of the first substrate is lower than the porosity of the second substrate.

In some embodiments, the porosity of the first substrate may be 30% to 70%, for example, 30%, 35%, 45%, 55%, 65%, 70%, or a range formed by any two of the above values.

Optionally, in some embodiments, the porosity of the first substrate may also be 35% to 55%, for example, 35%, 38%, 40%, 42%, 45%, 50%, 55%, or a range formed by any two of the above values.

In some embodiments, the porosity of the second substrate may be 35% to 85%, for example, 35%, 45%, 55%, 65%, 70%, 75%, 80%, 85%, or a range formed by any two of the above values.

Optionally, in some embodiments, the porosity of the second substrate may also be 40% to 75%, for example, 40%, 42%, 45%, 50%, 55%, 60%, 62%, 65%, 70%, 75%, or a range formed by any two of the above values.

By adjusting the porosity of the first substrate and/or the porosity of the second substrate to fall within the above range, the air permeability and mechanical strength of the first substrate, the second substrate, and the separator can be adjusted, and the separator can achieve good ion conductivity, thereby contributing to improving the cycle performance, kinetic performance, and the like of the secondary battery.

The porosity of the substrate has the meaning well-known in the art and may be tested using devices and methods known in the art. For example, the porosity of the substrate may be tested using a mercury porosimeter with reference to the test standard GB/T 21650-2008.

In some embodiments, the puncture strength of the first substrate is higher than the puncture strength of the second substrate.

In some embodiments, the puncture strength of the first substrate may be 200 gf to 450 gf, for example, 200 gf, 230 gf, 250 gf, 280 gf, 300 gf, 350 gf, 380 gf, 400 gf, 420 gf, 450 gf, or a range formed by any two of the above values.

Optionally, in some embodiments, the puncture strength of the first substrate may also be 230 gf to 420 gf, for example, 230 gf, 250 gf, 280 gf, 300 gf, 350 gf, 380 gf, 400 gf, 420 gf, or a range formed by any two of the above values.

In some embodiments, the puncture strength of the second substrate may be 100 gf to 220 gf, for example, 100 gf, 120 gf, 150 gf, 180 gf, 200 gf, 220 gf, or a range formed by any two of the above values.

Optionally, in some embodiments, the puncture strength of the second substrate may also be 120 gf to 180 gf, for example, 120 gf, 130 gf, 140 gf, 150 gf, 160 gf, 170 gf, 180 gf, or a range formed by any two of the above values.

By adjusting the puncture strength of the first substrate and/or the second substrate to satisfy the above condition, it is beneficial to reduce the risk of the separator being punctured by lithium dendrites or being punctured under mechanical impact, thereby further improving the reliability of the secondary battery.

The puncture strength of the substrate has the meaning well-known in the art and may be tested using devices and methods known in the art. For example, the puncture strength of the substrate may be tested with reference to GB/T 10004-2008. Specifically, the substrate may be cut into strips to obtain test pieces, and the width of the test pieces may be 100 mm. A test piece with a width of 100 mm is mounted on a sample film fixing clamp ring, and then the test piece is punctured with a steel needle having a diameter of 1.0 mm and a tip radius of 0.5 mm at a speed of $(50 \pm 5)$ mm/min, and the maximum load of the steel needle penetrating the test piece is read. 5 or more groups of parallel samples may be taken, 3 points are randomly tested for each group of samples, and an arithmetic average value of the puncture strengths of all the parallel samples is taken as the puncture strength of the substrate.

In some embodiments, the transverse elongation at break of the first substrate is higher than the transverse elongation at break of the second substrate.

In some embodiments, the longitudinal elongation at break of the first substrate is lower than the longitudinal elongation at break of the second substrate.

In some embodiments, the transverse elongation at break of the first substrate is higher than the transverse elongation at break of the second substrate, and the longitudinal elongation at break of the first substrate is lower than the longitudinal elongation at break of the second substrate.

In some embodiments, the transverse elongation at break of the first substrate may be 50% to 220%, for example, 50%, 60%, 80%, 100%, 130%, 150%, 170%, 200%, 220%, or a range formed by any two of the above values.

Optionally, in some embodiments, the transverse elongation at break of the first substrate may be 80% to 170%, for example, 80%, 100%, 120%, 130%, 150%, 160%, 170%, or a range formed by any two of the above values.

In some embodiments, the longitudinal elongation at break of the first substrate may be 30% to 100%, for example, 30%, 40%, 50%, 60%, 70%, 80%, 90%, 100%, or a range formed by any two of the above values.

Optionally, in some embodiments, the longitudinal elongation at break of the first substrate may also be 40% to 85%, for example, 40%, 50%, 55%, 60%, 65%, 70%, 75%, 80%, 85%, or a range formed by any two of the above values.

In some embodiments, the transverse elongation at break of the second substrate may be 40% to 200%, for example, 40%, 50%, 60%, 80%, 100%, 120%, 140%, 160%, 180%, 200%, or a range formed by any two of the above values.

Optionally, in some embodiments, the transverse elongation at break of the second substrate may also be 60% to 160%, for example, 60%, 65%, 70%, 75%, 80%, 90%, 100%, 110%, 120%, 130%, 140%, 150%, 160%, or a range formed by any two of the above values.

In some embodiments, the longitudinal elongation at break of the second substrate may be 50% to 700%, for example, 50%, 80%, 100%, 150%, 200%, 300%, 400%, 500%, 550%, 600%, 650%, 680%, 700%, or a range formed by any two of the above values.

Optionally, in some embodiments, the longitudinal elongation at break of the second substrate may also be 80% to 600%, for example, 80%, 100%, 120%, 150%, 180%, 200%, 250%, 300%, 350%, 400%, 450%, 480%, 500%, 530%, 550%, 580%, 600%, or a range formed by any two of the above values.

By adjusting the longitudinal elongation at break and/or the transverse elongation at break of the first substrate and/or the second substrate to fall within the above range, it is beneficial to improve the ductility and strength of the separator, thereby improving the processability of the separator. Thus, it is beneficial for the separator to achieve both good processability and high heat resistance, thereby contributing to improving the production yield and reliability of the secondary battery.

The transverse elongation at break and the longitudinal elongation at break of the substrate each have the meaning well-known in the art and may be measured using devices and methods known in the art. For example, both of them may be tested with reference to the standard GB/T 36363-2018.

In some embodiments, the material of the first substrate may include at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

In some embodiments, the material of the second substrate may include at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

The derivatives generally refer to products derived by replacing hydrogen atoms or atomic groups in polymer with other atoms or atomic groups.

In some embodiments, the first binder may include one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl amylopectin.

The first bonding layer can endow the separator with good heat resistance on the basis of ensuring the binding strength and uniformity of the first substrate and the second substrate, thereby improving the reliability of the secondary battery.

In some embodiments, the first bonding layer may further include a filler. The filler can further improve the heat resistance and physical properties (such as tensile strength and puncture strength) of the separator, thereby improving the reliability of the secondary battery.

In some embodiments, the filler may include at least one of inorganic particles, organic particles, and an organic-metal framework material.

Optionally, the inorganic particles may include one or more of inorganic particles having a dielectric constant greater than or equal to 5, inorganic particles having ion conductivity but not storing ions, and inorganic particles capable of undergoing an electrochemical reaction.

Optionally, the organic particles may include one or more of polycarbonate, polythiophene, polypyridine, polystyrene, polyacrylic wax, polyethylene, polypropylene, cellulose, cellulose modifiers (for example, carboxymethyl cellulose), melamine resin, phenol resin, polyester (for example, polyethylene terephthalate, polyethylene naphthalate, and polybutylene terephthalate), silicone resin, polyimide, polyamideimide, polyaramid, polyphenylene sulfide, polysulfone, polyethersulfone, polyetheretherketone, polyaryletherketone, a copolymer of butyl acrylate and ethyl methacrylate (for example, a cross-linked polymer of butyl acrylate and ethyl methacrylate).

Optionally, the organic-metal framework material may include one or more of a nitrogen-containing heterocyclic ligand building structure, an organic carboxylic ligand building structure, and a nitrogen-oxygen mixed ligand building structure.

In some embodiments, the content of the filler may be less than or equal to 90%, optionally 30% to 85%, based on the total mass of the first bonding layer.

In some embodiments, the content of the first binder may be less than or equal to 30%, optionally less than or equal to 20%, based on the total mass of the first bonding layer.

In some embodiments, the first bonding layer may further include a dispersant, such as carboxymethyl cellulose, whereby the viscosity of slurry for the first bonding layer may be adjusted, improving the quality and uniformity of a film layer.

In some embodiments, the volume distribution particle diameter Dv50 of the filler may be 0.05 $\mu$m to 1.2 $\mu$m, for example, 0.05 $\mu$m, 0.1 $\mu$m, 0.15 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 0.9 $\mu$m, 1 $\mu$m, 1.1 $\mu$m, 1.2 $\mu$m, or a range formed by any two of the above values.

Optionally, in some embodiments, the volume distribution particle diameter Dv50 of the filler may also be 0.2 $\mu$m to 0.8 $\mu$m, for example, 0.2 $\mu$m, 0.25 $\mu$m, 0.3 $\mu$m, 0.35 $\mu$m, 0.4 $\mu$m, 0.5 $\mu$m, 0.55 $\mu$m, 0.6 $\mu$m, 0.7 $\mu$m, 0.75 $\mu$m, 0.8 $\mu$m, or a range formed by any two of the above values.

The volume distribution particle diameter Dv50 of the particles in the filler has the meaning well-known in the art and may represent the particle size when the cumulative volume distribution percentage of the particles in the filler reaches 50%. The volume distribution particle diameter Dv50 may be determined using devices and methods known in the art. For example, the volume distribution particle diameter Dv50 may be determined using a laser particle size analyzer (e.g., Malvern Master Size 3000) with reference to GB/T 19077-2016 "Particle Size Distribution - Laser Diffraction Method".

In some embodiments, the specific surface area of the filler may be 4g/m$^2$ to 12 g/m$^2$, for example, 4 g/m$^2$, 5 g/m$^2$, 6 g/m$^2$, 7 g/m$^2$, 8 g/m$^2$, 9 g/m$^2$, 10 g/m$^2$, 11 g/m$^2$, 12 g/m$^2$, or a range formed by any two of the above values.

Optionally, in some embodiments, the specific surface area of the filler may also be 6 g/m$^2$ to 9 g/m$^2$, for example, 6 g/m$^2$, 6.5 g/m$^2$, 7 g/m$^2$, 7.5 g/m$^2$, 8 g/m$^2$, 8.5 g/m$^2$, 9 g/m$^2$, or a range formed by any two of the above values.

The specific surface area of the particles in the filler has the meaning well-known in the art and may be measured using methods known in the art. For example, the specific surface area of the particles in the filler may be measured through a nitrogen adsorption/desorption method using a specific surface area analyzer (e.g., Tristar II 3020M).

In some embodiments, the second binder includes one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl amylopectin.

In some embodiments, the second bonding layer includes a second binder different in material from the first binder.

In some embodiments, the first binder includes polyacrylate.

In some embodiments, the second binder includes polyvinylidene fluoride (PVDF).

In some embodiments, the second binder includes both polyvinylidene fluoride (PVDF) and polyacrylate.

The second binder can increase the binding force between the separator and the electrode sheet, and reduce the gap between the separator and the electrode sheet, thereby delaying the growth of lithium dendrites, and further improving the cycle performance of the battery.

In some embodiments, the content of the second binder may be greater than or equal to 85%, optionally greater than or equal to 90%, based on the total mass of the second bonding layer. The component of the second bonding layer is mainly a binder, which helps to increase a binding force between the second bonding layer and the electrode sheet. This is advantageous for further improving the reliability of the secondary battery.

In some embodiments, the second bonding layer further includes a dispersant, such as carboxymethyl cellulose, whereby the viscosity of slurry for the second bonding layer may be adjusted, improving the quality and uniformity of the film layer.

In some embodiments, the first binder and/or the second binder includes an aqueous binder. The aqueous binder generally refers to a binder that may employ water as a dispersant or solvent.

In some embodiments, the first binder and the second binder each include an aqueous binder, for example, in the first bonding layer and the second bonding layer, the first binder and the second binder may each independently include one or more of styrene-butadiene rubber (SBR), aqueous unsaturated resin SR-1B, aqueous acrylic resin (e.g., polyacrylic acid (PAA), polymethacrylic acid (PMAA), and sodium polyacrylate (PAAS)), aqueous acrylate resin (e.g., polyacrylate), aqueous polyacrylamide (PAM), aqueous polyvinyl alcohol (PVA), aqueous sodium alginate (SA), aqueous carboxymethyl chitosan (CMCS), and aqueous polyvinylidene fluoride (PVDF).

In some embodiments, the transverse tensile strength of the separator may be greater than or equal to 600 $kg/cm^2$, optionally 800 $kg/cm^2$ to 2,500 $kg/cm^2$.

In some embodiments, the longitudinal tensile strength of the separator may be greater than or equal to 800 $kg/cm^2$, optionally 1,000 $kg/cm^2$ to 3,000 $kg/cm^2$.

In some embodiments, the air permeability of the separator may be 150 s/100cc to 500 s/100cc, optionally 180 s/100cc to 380 s/100cc.

In some embodiments, the transverse thermal shrinkage rate of the separator at 250°C for 1 h may be less than or equal to 5%, optionally 0.05% to 3%.

In some embodiments, the longitudinal thermal shrinkage rate of the separator at 250°C for 1 h may be less than or equal to 5%, optionally 0.05% to 3%.

When at least one of the transverse tensile strength, the longitudinal tensile strength, the air permeability, the transverse thermal shrinkage rate, and the longitudinal thermal shrinkage rate of the separator falls within the given range, the separator can achieve good heat resistance and physical properties, so that the stability of the secondary battery can be improved.

The transverse tensile strength, the longitudinal tensile strength, the transverse thermal shrinkage rate, and the longitudinal thermal shrinkage rate of the separator may each have the meaning well-known in the art and may be measured using devices and methods known in the art. For example, all of them may be tested with reference to GB/T 36363-2018.

The air permeability of the separator has the meaning well-known in the art and may be measured using devices and methods known in the art. For example, the air permeability of the separator may be tested with reference to GB/T 36363-2018. A test gas may be 100cc air.

#### Preparation method

An embodiment of the present application further provides a method for preparing the separator provided in the embodiment of the present application. The method includes the following steps: providing a first substrate, a second substrate, a slurry for a first bonding layer, and a slurry for a second bonding layer, where the slurry for the first bonding layer includes a first binder, and the slurry for the second bonding layer includes a second binder; applying the slurry for the first bonding layer onto one of the first substrate and the second substrate, followed by laminating with the other of the first substrate and the second substrate, thereby forming the first bonding layer between the first substrate and the second substrate; and applying the slurry for the second bonding layer onto a surface of the first substrate facing away from the first bonding layer, and/or applying the slurry for the second bonding layer onto a surface of the second substrate facing away from the first bonding layer, thereby obtaining the separator. If the thickness of the first bonding layer is denoted as T1 and the thickness of the second bonding layer is denoted as T2, the separator satisfies: T1/T2 > 1.

In some embodiments, the slurry for the first bonding layer may include a first binder and a filler.

In some embodiments, the slurry for the bonding layer may be applied by means of transfer coating, spin coating, dip coating, or the like, which is not limited in the embodiment of the present application.

In some embodiments, the temperature of the laminating is 20°C to 50°C, 20°C to 40°C, 20°C to 30°C, 30°C to 50°C, 30°C to 40°C, or 40°C to 50°C.

In some embodiments, the time for the laminating is 5 s to 60 s, 5 s to 40 s, 5 s to 20 s, 5 s to 10 s, 10 s to 60 s, 10 s to 40 s, or 10 s to 20 s.

In some embodiments, the pressure of the laminating is 1 MPa to 10 MPa, 2 MPa to 8 MPa, 3 MPa to 7 MPa, or 4 MPa to 6 MPa.

Unless otherwise specified, various raw materials (for example, the first substrate, the second substrate, the binder, the filler, and the like) used in the method for preparing the separator may be commercially available.

## Secondary battery

An embodiment of the present application further provides a secondary battery.

The secondary battery, also known as a rechargeable battery or a storage battery, refers to a battery that can continue to be used by activating an active material by means of charging after discharging the battery. Generally, the secondary battery includes an electrode assembly and an electrolyte solution, where the electrode assembly includes a positive electrode sheet, a negative electrode sheet, and a separator, and the separator is disposed between the positive electrode sheet and the negative electrode sheet, mainly functions to prevent a positive electrode and a negative electrode from being short-circuited, and may allow active ions to pass through.

The type of the secondary battery is not particularly limited in the present application, for example, the secondary battery may be a lithium-ion battery, a sodium-ion battery, a lithium metal battery, a sodium metal battery, or the like, and in particular, the secondary battery may be a lithium-ion battery.

The secondary battery provided in the embodiment of the present application includes the separator as above in the present application, which can improve the reliability and energy density of the battery.

[Positive electrode sheet]

In some embodiments, the positive electrode sheet may include a positive electrode current collector and a positive electrode film layer disposed on at least one surface of the positive electrode current collector and including a positive electrode active material. For example, the positive electrode current collector has two surfaces opposite in its thickness direction, and the positive electrode film layer is provided on either one or both of the two opposite surfaces of the positive electrode current collector.

When the secondary battery is a lithium-ion battery, the positive electrode active material may include, but is not limited to, at least one of lithium transition metal oxide, lithium-containing phosphate, and their respective modified compounds. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. Examples of the lithium-containing phosphate may include, but are not limited to, at least one of lithium iron phosphate, a composite of lithium iron phosphate and carbon, lithium manganese phosphate, a composite of lithium manganese phosphate and carbon, lithium ferric manganese phosphate, a composite of lithium ferric manganese phosphate and carbon, and their respective modified compounds.

In some embodiments, to further increase the energy density of the secondary battery, the positive electrode active material for a lithium-ion battery may include at least one of lithium transition metal oxide having a general formula of $Li_aNi_bCo_cM_dO_eA_f$ and a modified compound thereof. $0 < a \leq 1.2$, $0.5 \leq b \leq 1$, $0 < c < 1$, $0 \leq d < 1$, $0 < e \leq 2$, $0 \leq f \leq 1$, M is selected from at least one of Mn, Al, Zr, Zn, Cu, Cr, Mg, Fe, V, Ti, and B, and A is selected from at least one of N, F, S, and Cl.

As an example, the positive electrode active material for a lithium-ion battery may include at least one of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$, and $LiMnPO_4$.

When the secondary battery is a sodium-ion battery, the positive electrode active material may include, but is not limited to, at least one of sodium-containing transition metal oxide, a polyanionic material (such as phosphate, fluorophosphate, pyrophosphate, and sulfate), and a Prussian blue material.

As an example, the positive electrode active material for a sodium-ion battery may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian blue material, and a material having a general formula of $X_pM'_q(PO_4)_rO_xY_{3-x}$. In the general formula of $X_pM'_q(PO_4)_rO_xY_{3-x}$, $0 < p \leq 4$, $0 \leq q \leq 2$, $1 \leq r \leq 3$, $0 \leq x \leq 2$, X is selected from at least one of $H^+$, $Li^+$, $Na^+$, $K^+$ and $NH_4^+$, M' is a transition metal cation, optionally at least one of V, Ti, Mn, Fe, Co, Ni, Cu, and Zn, and Y is a halide anion, optionally at least one of F, Cl, and Br.

The modified compound of each of the above positive electrode active materials may be a compound of the positive electrode active material subjected to doping modification and/or surface coating modification.

In some embodiments, the positive electrode film layer optionally further comprises a positive electrode conductive agent. The type of the positive electrode conductive agent is not particularly limited in the present application. As an example, the positive electrode conductive agent includes at least one of superconducting carbon, conductive graphite, acetylene black, carbon black, Ketjen black, carbon dot, carbon nanotube, graphene, and carbon nanofiber.

In some embodiments, the positive electrode film layer optionally further comprises a positive electrode binder.

The type of the positive electrode binder is not particularly limited in the present application. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, for the positive electrode current collector, a metal foil or a composite current collector may be employed. As an example of the metal foil, an aluminum foil may be used. The composite current collector may include a high-molecule material base layer and a metal material layer formed on at least one surface of the high-molecule material base layer. As an example, the metal material may include at least one of aluminum, an aluminum alloy, nickel, a nickel alloy, titanium, a titanium alloy, silver, and a silver alloy. As an example, the polymer material base layer may include at least one of polypropylene (PP), polyethylene terephthalate (PET), polybutylene terephthalate (PBT), polystyrene (PS), and polyethylene (PE).

The positive electrode film layer is generally formed by applying positive electrode slurry onto the positive electrode current collector, followed by drying and cold pressing. The positive electrode slurry is generally formed by dispersing a positive electrode active material, an optional conductive agent, an optional binder, and any other component in a solvent and stirring them uniformly. The solvent may be N-methylpyrrolidone (NMP), but is not limited thereto.

[Negative electrode sheet]

In some embodiments, the negative electrode sheet may include a negative electrode current collector and a negative electrode film layer disposed on at least one surface of the negative electrode current collector and including a negative electrode active material. For example, the negative electrode current collector has two surfaces opposite in its thickness direction, and the positive electrode film layer is disposed on either one or both of the two opposite surfaces of the negative electrode current collector.

The negative electrode active material may be a negative electrode active material for a secondary battery well-known in the art. As an example, the negative electrode active material may include, but is not limited to, at least one of artificial graphite, natural graphite, hard carbon, soft carbon, a silicon-based material, a tin-based material, and lithium titanate. The silicon-based material may include at least one of elemental silicon, silicon oxide, a silicon-carbon composite, a silicon-nitrogen composite, and a silicon alloy material. The tin-based material may include at least one of elemental tin, tin oxide, and a tin alloy material.

In some embodiments, the negative electrode film layer optionally further includes a negative electrode conductive agent. The type of the negative electrode conductive agent is not particularly limited in the present application. As an example, the negative electrode conductive agent includes at least one of superconducting carbon, conductive graphite, acetylene black, carbon black, Ketjen black, carbon dot, carbon nanotube, graphene, and carbon nanofiber.

In some embodiments, the negative electrode film layer optionally further includes a negative electrode binder. The type of the negative electrode binder is not particularly limited in the present application. As an example, the negative electrode binder may include at least one of styrene-butadiene rubber (SBR), aqueous unsaturated resin SR-1B, aqueous acrylic resin (e.g., polyacrylic acid (PAA), polymethacrylic acid (PMAA), and sodium polyacrylate (PAAS)), polyacrylamide (PAM), polyvinyl alcohol (PVA), sodium alginate (SA), and carboxymethyl chitosan (CMCS).

In some embodiments, the negative electrode film layer optionally further includes other auxiliary agents. As an example, other auxiliary agents may include a thickening agent, such as carboxymethylcellulose (CMC) sodium and a PTC thermistor material.

In some embodiments, the negative electrode current collector may be a metal foil or a composite current collector. As an example of the metal foil, a copper foil may be used. The composite current collector may include a high-molecule material base layer and a metal material layer formed on at least one surface of the high-molecule material base layer. As an example, the metal material may include at least one of copper, a copper alloy, nickel, a nickel alloy, titanium, a titanium alloy, silver, and a silver alloy. As an example, the polymer material base layer may include at least one of polypropylene (PP), polyethylene terephthalate (PET), polybutylene terephthalate (PBT), polystyrene (PS), and polyethylene (PE).

The negative electrode film layer is generally formed by applying negative electrode slurry onto the negative electrode current collector, followed by drying and cold pressing. The negative electrode slurry is generally formed by dispersing a negative electrode active material, an optional conductive agent, an optional binder, and other optional auxiliary agents in a solvent and stirring them uniformly. The solvent may be N-methylpyrrolidone (NMP) or de-ionized water, but is not limited thereto.

The negative electrode sheet does not exclude other additional functional layers in addition to the negative electrode film layer. For example, in some embodiments, the negative electrode sheet further includes a conductive undercoat layer (for example, composed of a conductive agent and a binder) sandwiched between the negative electrode current collector and the negative electrode film layer and disposed on the surface of the negative electrode current collector. In some embodiments, the negative electrode sheet in the present application further includes a protective layer covering the surface of the negative electrode film layer.

[Electrolyte solution]

During charging and discharging of the secondary battery, active ions are intercalated and deintercalated back and forth between the positive electrode sheet and the negative electrode sheet. The electrolyte solution functions to conduct the active ions between the positive electrode sheet and the negative electrode sheet. The type of the electrolyte solution is not particularly limited in the present application and may be selected according to an actual requirement.

The electrolyte solution includes an electrolyte salt and a solvent. The type of the electrolyte salt and the type of the solvent are not limited specifically and may be selected according to an actual requirement.

When the secondary battery is a lithium-ion battery, as an example, the electrolyte salt may include, but is not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluorobis(oxalato)phosphate (LiDFOP), and lithium tetrafluoro(oxalato)phosphate (LiTFOP).

When the secondary battery is a sodium-ion battery, as an example, the electrolyte salt may include at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate ($NaPO_2F_2$), sodium difluorobis(oxalato)phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some embodiments, the electrolyte solution optionally further includes an additive. For example, the additive may include a negative electrode film-forming additive or a positive electrode film-forming additive, and may further include an additive capable of improving specific performance of a battery, for example, an additive for improving overcharge performance of a battery, an additive for improving high-temperature performance of a battery, and an additive for improving low-temperature power performance of a battery.

In some embodiments, the positive tab, separator, and negative tab may be fabricated into an electrode assembly by a winding process and/or a lamination process. The negative electrode sheet may face the second bonding layer in the separator, so that a small gap can be formed between the negative electrode sheet and the separator, thereby delaying the growth of lithium dendrites, and improving the reliability of the battery. It can be understood that the separator in the present application includes both the first substrate and the second substrate, and the first substrate or the second substrate may optionally face the positive electrode sheet or the negative electrode sheet. For example, the first substrate faces the positive electrode sheet, and the second substrate faces the negative electrode sheet; or the first substrate faces the negative electrode sheet, and the second substrate faces the positive electrode sheet.

In some embodiments, the secondary battery may include an outer package. The outer package may be used to encapsulate the electrode assembly and the electrolyte described above.

In some embodiments, the outer package of the battery may be a hard shell, such as a hard plastic shell, an aluminum shell, and a steel shell. The outer package of the secondary battery may also be a pouch, such as a bag-type pouch. The material of the pouch may be a plastic, such as at least one of polypropylene (PP), polybutylene terephthalate (PBT), and polybutylene succinate (PBS).

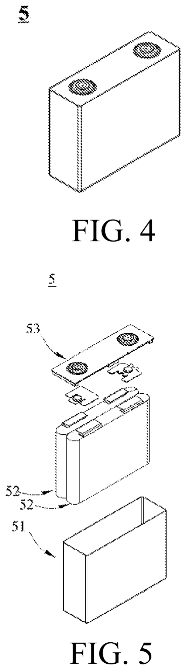

The shape of the secondary battery is not limited in this application, and may be a cylindrical shape, a square shape, or any other shape. For example, FIG. 4 illustrates a square secondary battery 5 as an example.

In some embodiments, as shown in FIG. 5, the outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The positive tab, the negative tab, and the separator may be formed into the electrode assembly 52 by a winding process and/or a lamination process. The electrode assembly 52 is packaged in the accommodating chamber. The electrolyte is impregnated into the electrode assembly 52. There may be one or a plurality of the electrode assemblies 52 contained in the secondary battery 5, and adjustments may be made according to requirements.

The method for preparing the secondary battery is well known. In some embodiments, the positive electrode sheet, the separator, the negative electrode sheet, and the electrolyte solution may be assembled to form the secondary battery. As an example, the positive electrode sheet, the separator, and the negative electrode sheet may be formed into the electrode assembly through a winding process and/or a lamination process, and the electrode assembly may be placed in the outer package, dried, then injected with the electrolyte solution, and subjected to procedures such as vacuum sealing, standing, formation, and shaping to obtain the secondary battery.

In some embodiments, the secondary battery according to the present application may be assembled into a battery module. The battery module may contain a plurality of secondary batteries. The specific number may be adjusted according to the application and capacity of the battery module.

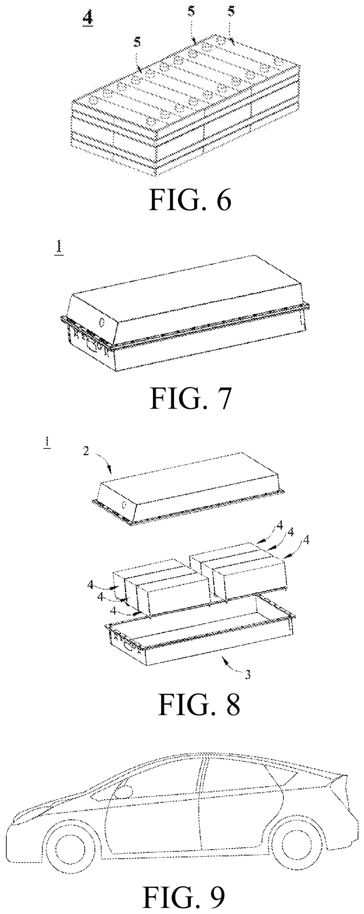

FIG. 6 is a schematic diagram of a battery module 4 as an example. As shown in FIG. 6, in the battery module 4, a plurality of secondary batteries 5 may be arranged sequentially along the length direction of the battery module 4. Certainly, the secondary batteries may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some embodiments, the battery modules described above may also be assembled into a battery pack, and the number of battery modules included in the battery pack may be adjusted according to the application and capacity of the battery pack.

FIG. 7 and FIG. 8 are schematic diagrams of a battery pack 1 as an example. As shown in FIG. 7 and FIG. 8, the battery pack 1 may include a battery case and a plurality of battery modules 4 disposed in the battery case. The battery case includes an upper case body 2 and a lower case body 3. The upper case body 2 is configured to cover the lower case body 3 to form a closed space for accommodating the battery modules 4. The plurality of battery modules 4 may be arranged in any manner in the battery case.

## Electric device

An embodiment of the present application further provides an electric device, including at least one of the secondary battery, the battery module, or the battery pack provided in the embodiments of the present application. The secondary battery, the battery module, or the battery pack may be used as a power supply for the electric device, or as an energy storage unit for the electric device. The electric device may include, but is not limited to, mobile equipment (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

For the electric device, the secondary battery, the battery module, or the battery pack may be selected according to the use need.

FIG. 9 is a schematic diagram of an electric device as an example. The electric device is a pure electric vehicle, a hybrid electric vehicle, a plug-in hybrid electric vehicle, or the like. For the high power and high energy density required by the electrical device, a battery pack or a battery module may be used.

As another example, the electric device may be a cell phone, a tablet computer, a notebook computer, or the like. This electric device is generally required to be thin and lightweight, and may use a secondary battery as a power supply.

## Examples

The following example particularly describes the disclosure of the present application. The example is only used for illustration, since various modifications and changes within the scope of the present application are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

## Example 1

### Preparation of separator

A first substrate was provided, which was made from a material including polyethylene (PE), with a thickness of 5 $\mu$m and a melting point of 135°C.

A second substrate was provided, which was made from a material including polypropylene (PP), with a thickness of 6 $\mu$m and a melting point of 165°C.

A slurry for a first bonding layer was prepared by uniformly mixing boehmite as a filler, polyacrylate as a first binder, and carboxymethyl cellulose as a dispersant in an appropriate amount of deionized water as a solvent at a mass ratio of 8 : 1 : 1.

A slurry for a second bonding layer was prepared by uniformly dispersing polyvinylidene fluoride (PVDF) and polyacrylate (with a mass ratio of 8 : 2) as a second binder and carboxymethyl cellulose as a dispersant in an appropriate amount of deionized water as a solvent at a mass ratio of 9 : 1.

The slurry for the first bonding layer was applied onto the PE substrate to form the first bonding layer, and the PP substrate and the PE substrate were laminated, so that the first bonding layer was between the PP substrate and the PE substrate; and then the slurry for the second bonding layer was applied onto the surfaces of the PP substrate and the PE substrate facing away from the first bonding layer, and subjected to procedures such as drying to prepare a separator. When the thickness T1 of the first bonding layer was 1.0 $\mu$m and the thickness T2 of the second bonding layer was 0.8 $\mu$m, T1/T2 was 1.25.

Preparation of positive electrode sheet

$LiNi_{0.8}Co_{0.1}Mn_{0.1}O_2$ (NCM811) as a positive electrode active material, carbon black (Super P) as a conductive agent, and polyvinylidene fluoride (PVDF) as a binder were uniformly mixed in an appropriate amount of N-methyl pyrrolidone (NMP) as a solvent at a mass ratio of 96.2 : 2.7 : 1.1 to obtain a positive electrode slurry; and the positive electrode slurry was applied onto an aluminum foil as a positive electrode current collector, and subjected to procedures such as drying, cold pressing, slitting, and cutting to obtain a positive electrode sheet.

Preparation of negative electrode sheet

Artificial graphite as a negative electrode active material, carbon black (Super P) as a conductive agent, styrene-butadiene rubber (SBR) as a binder, and sodium carboxymethyl cellulose (CMC) were uniformly mixed in an appropriate amount of deionized water as a solvent at a mass ratio of 96.4 : 0.7 : 1.8 : 1.1 to obtain a negative electrode slurry; and the negative electrode slurry was applied onto a copper foil as a negative electrode current collector, and subjected to procedures such as drying, cold pressing, slitting, and cutting to obtain a negative electrode sheet.

Preparation of electrolyte solution

Ethylene carbonate (EC), dimethyl carbonate (DMC), and ethyl methyl carbonate (EMC) were mixed at a mass ratio of 30 : 30 : 40 to obtain an organic solvent, and fully dried $LiPF_6$ was dissolved in the organic solvent to prepare an electrolyte solution with a concentration of 1 mol/L.

Preparation of secondary battery

The positive electrode sheet, the prepared separator, and the negative electrode sheet were sequentially stacked and wound to obtain an electrode assembly, where the first substrate in the separator faced the negative electrode; and the electrode assembly was placed in an outer package, dried, then injected with the electrolyte solution, and subjected to procedures such as vacuum sealing, standing, formation, and shaping to obtain a secondary battery.

The secondary batteries in Examples 2-11 and Comparative Examples 1-2 are similar to the secondary battery in Example 1, except that different substrates are used or the parameters of a coating are adjusted, specifically shown in Table 1.

**Test Section**

The separators and the secondary batteries in Examples 1-11 and Comparative Examples 1-2 were tested as follows, with test results shown in Table 2 respectively.

(1) Test for thermal shrinkage rate of separator

Sample preparation: the prepared separator was punched with a punch into a sample having a width of 50 mm and a length of 100 mm, and 5 parallel samples were placed on a glass plate and fixed.

Sample test: the temperature of a forced-air convection oven was set to 250°C; after the temperature reached a set temperature and was stable for 30 minutes, the glass plate was placed in the forced-air convection oven for 1 hour; and after that, the width of the separator was measured, where the value of the width was denoted as a in mm.

Calculation of thermal shrinkage rate: transverse (TD) thermal shrinkage rate = [(50 - a)/50]×100%, and the average value of 5 parallel samples was taken as the test result.

(2) Test for room-temperature cycle performance of battery

At 25°C, the batteries in Examples and Comparative Examples were charged with a constant current at 1C to a voltage of 4.2 V, then charged with a constant voltage of 4.2 V to a current at ≤ 0.05C, and then discharged with a constant current at 1C to a voltage of 2.8 V. This was one charge-discharge cycle. At this time, the discharge capacity was recorded as the initial-cycle discharge capacity of the batteries. The charge-discharge cycle was repeated in this manner, and the number of cycles at which the capacity faded to 85% was recorded.

Table 1

| No. | T1/μm | T2/μm | T1/T2 | Material of first substrate | Thickness of first substrate | Melting point of first substrate | Material of second substrate | Thickness of second substrate | Melting point of second substrate |
|---|---|---|---|---|---|---|---|---|---|
| Example 1 | 1.0 | 0.8 | 1.25 | PE | 5 μm | 135°C | PP | 6 μm | 165°C |
| Example 2 | 0.7 | 0.5 | 1.40 | PE | 5 μm | 135°C | PP | 6 μm | 165°C |
| Example 3 | 1.5 | 1.0 | 1.50 | PE | 5 μm | 135°C | PP | 6 μm | 165°C |
| Example 4 | 0.8 | 0.5 | 1.60 | PE | 5 μm | 135°C | PP | 6 μm | 165°C |
| Example 5 | 2.0 | 1.0 | 2.00 | PE | 5 μm | 135°C | PP | 6 μm | 165°C |
| Example 6 | 1.5 | 0.5 | 3.00 | PE | 5 μm | 135°C | PP | 6 μm | 165°C |
| Example 7 | 2.0 | 0.5 | 4.00 | PE | 5 μm | 135°C | PP | 6 μm | 165°C |
| Example 8 | 2.5 | 0.5 | 5.00 | PE | 5 μm | 135°C | PP | 6 μm | 165°C |
| Example 9 | 1.5 | 1.0 | 1.50 | PE | 5 μm | 135°C | PTFE | 4 μm | 327°C |
| Example 10 | 1.5 | 1.0 | 1.50 | PE | 5 μm | 135°C | PET | 4 μm | 270°C |
| Example 11 | 1.5 | 1.0 | 1.50 | PE | 5 μm | 135°C | PI | 4 μm | 350°C |
| Comparative Example 1 | 0.8 | 1.0 | 0.80 | PE | 5 μm | 135°C | PP | 6 μm | 165°C |
| Comparative Example 2 | 1.5 | 1.5 | 1.00 | PE | 5 μm | 135°C | PP | 6 μm | 165°C |

Table 2

| No. | Thermal shrinkage rate (TD) | Cycle performance/cycles |
|---|---|---|
| Example 1 | 2.50% | 1910 |
| Example 2 | 2.70% | 1880 |
| Example 3 | 1.70% | 2380 |
| Example 4 | 2.20% | 2335 |
| Example 5 | 1.60% | 2405 |
| Example 6 | 1.72% | 2395 |
| Example 7 | 1.85% | 2367 |
| Example 8 | 1.80% | 1980 |
| Example 9 | 0.80% | 1920 |
| Example 10 | 0.90% | 1910 |
| Example 11 | 0.70% | 1980 |
| Comparative Example 1 | 5.30% | 1509 |
| Comparative Example 2 | 4.50% | 1606 |

It can be seen from Table 1 and Table 2 that in Examples 1-11, the thickness T1 of the first bonding layer and the thickness T2 of the second bonding layer satisfy T1/T2 > 1, and the prepared separator has better heat resistance. In particular, under the design of a specific thickness ratio in the present application, the heat resistance of the separator can be significantly improved by using the high-melting-point substrate. It can be seen from the test results in Examples 1-8 that adjusting T1/T2 to fall within an appropriate range may enable the secondary battery to have better cycle performance while maintaining the heat resistance of the separator. It can be seen from Examples 3 and 9-11 that the material and thickness of the substrate may affect the heat resistance of the separator and the cycle performance of the battery. Under the design of a specific ratio of T1 to T2 in the present application, adjusting the material and thickness of the substrate may further improve the heat resistance of the separator.

In contrast, Comparative Example 1 and Comparative Example 2 do not satisfy that the thickness T1 of the first bonding layer is greater than the thickness T2 of the second bonding layer, so that the prepared separator has poor heat resistance, and the prepared battery has poor cycle performance.

It should be noted that the present application is not limited to the above-described embodiment. The above-described embodiment is merely an example, and any embodiment having substantially the same configuration as the technical concept and exhibiting the same effect within the scope of the technical solution of the present application is included in the technical scope of the present application. Additionally, the scope of the present application also include various modifications to the embodiments conceived by those skilled in the art, and other embodiments constructed by combining some constituent elements in the embodiment without departing from the spirit of the present application.

**Claims**

1. A separator, comprising:

    a first substrate;
    a second substrate;
    a first bonding layer located between the first substrate and the second substrate, the first bonding layer comprising a first binder; and
    a second bonding layer located on one side of the first substrate and/or the second substrate facing away from the first bonding layer, the second bonding layer comprising a second binder,
    wherein if the thickness of the first bonding layer is denoted as T1 and the thickness of the second bonding layer is denoted as T2, the separator satisfies:

$$T1/T2 > 1.$$

2. The separator according to claim 1, wherein
    $1.25 \leq T1/T2 \leq 5$, optionally $1.5 \leq T1/T2 \leq 4$.

3. The separator according to claim 1 or 2, wherein

    the thickness T1 of the first bonding layer is less than or equal to 4 $\mu$m optionally 0.5 $\mu$m to 3 $\mu$m; and/or
    the thickness T2 of the second bonding layer is equal to or less than 2 $\mu$m optionally 0.4 $\mu$m to 1.5 $\mu$m.

4. The separator according to any one of claims 1 to 3, wherein
    the total thickness T of the separator is less than 12 $\mu$m, optionally 3 $\mu$m to 10 $\mu$m.

5. The separator according to any one of claims 1 to 4, wherein

    the thickness of the first substrate is less than or equal to 9 $\mu$m, optionally 3 $\mu$m to 6 $\mu$m; and/or
    the thickness of the second substrate is less than or equal to 8 $\mu$m, optionally 1 $\mu$m to 5 $\mu$m.

6. The separator according to any one of claims 1 to 5, wherein

    the melting point of the first substrate is lower than the melting point of the second substrate;
    optionally, the melting point of the first substrate is 120°C to 280°C, optionally 130°C to 260°C; and
    optionally, the melting point of the second substrate is 160°C to 370°C, optionally 170°C to 350°C.

7. The separator according to any one of claims 1 to 6, wherein

the porosity of the first substrate is lower than the porosity of the second substrate;
optionally, the porosity of the first substrate is 30% to 70%, optionally 35% to 55%; and
optionally, the porosity of the second substrate is 35% to 85%, optionally 40% to 75%.

8. The separator according to any one of claims 1 to 7, wherein

the puncture strength of the first substrate is higher than the puncture strength of the second substrate;
optionally, the puncture strength of the first substrate is 200 gf to 450 gf, optionally 230 gf to 420 gf; and
optionally, the puncture strength of the second substrate is 100 gf to 220 gf, optionally 120 gf to 180 gf.

9. The separator according to any one of claims 1 to 8, wherein

the transverse elongation at break of the first substrate is higher than the transverse elongation at break of the second substrate; and/or
the longitudinal elongation at break of the first substrate is lower than the longitudinal elongation at break of the second substrate.

10. The separator according to any one of claims 1 to 9, wherein the separator satisfies at least one of the following items (1) to (4):

(1) the transverse elongation at break of the first substrate is 50% to 220%, optionally 80% to 170%;
(2) the longitudinal elongation at break of the first substrate is 30% to 100%, optionally 40% to 85%;
(3) the transverse elongation at break of the second substrate is 40% to 200%, optionally 60% to 160%; and
(4) the longitudinal elongation at break of the second substrate is 50% to 700%, optionally 80% to 600%.

11. The separator according to any one of claims 1 to 10, wherein the first binder and/or the second binder each independently comprises one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl amylopectin; and optionally, the second bonding layer comprises the second binder different in material from the first binder.

12. The separator according to any one of claims 1 to 11, wherein the content of the first binder is less than or equal to 30%, optionally less than or equal to 20%, based on the total mass of the first bonding layer; and/or
the content of the second binder is greater than or equal to 85%, optionally greater than or equal to 90%, based on the total mass of the second bonding layer.

13. The separator according to any one of claims 1 to 12, wherein the first binder and/or the second binder comprises an aqueous binder.

14. The separator according to any one of claims 1 to 13, wherein

the material of the first substrate comprises at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof; and/or
the material of the second substrate comprises at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

15. The separator according to any one of claims 1 to 14, wherein the first bonding layer further comprises a filler;

optionally, the filler comprises at least one of inorganic particles, organic particles, and an organic-metal framework material;

optionally, the content of the filler is less than or equal to 90%, optionally 30% to 85%, based on the total mass of the first bonding layer;

optionally, the volume distribution particle diameter Dv50 of the filler is 0.05 $\mu$m to 1.2 $\mu$m, optionally 0.2 $\mu$m to 0.8 $\mu$m; and

optionally, the specific surface area of the filler is 4 g/m$^2$ to 12 g/m$^2$, optionally 6 g/m$^2$ to 9 g/m$^2$.

16. The separator according to any one of claims 1 to 15, wherein the separator satisfies at least one of the following items (1) to (5):

(1) the transverse tensile strength of the separator is greater than or equal to 600 kg/cm$^2$, optionally 800 kg/cm$^2$ to 2,500 kg/cm$^2$;

(2) the longitudinal tensile strength of the separator is greater than or equal to 800 kg/cm$^2$, optionally 1,000 kg/cm$^2$ to 3,000 kg/cm$^2$;

(3) the air permeability of the separator is 150 s/100cc to 500 s/100cc, optionally 180 s/100cc to 380 s/100cc;

(4) the transverse thermal shrinkage rate of the separator at 250°C for 1 h is less than or equal to 5%, optionally 0.05% to 3%; and

(5) the longitudinal thermal shrinkage rate of the separator at 250°C for 1 h is less than or equal to 5%, optionally 0.05% to 3%.

17. A method for preparing the separator according to any one of claims 1 to 16, comprising the following steps:

providing a first substrate, a second substrate, a slurry for a first bonding layer, and a slurry for a second bonding layer, wherein the slurry for the first bonding layer comprises a first binder, and the slurry for the second bonding layer comprises a second binder;

applying the slurry for the first bonding layer onto one of the first substrate and the second substrate, followed by laminating with the other of the first substrate and the second substrate, thereby forming the first bonding layer between the first substrate and the second substrate; and

applying the slurry for the second bonding layer onto a surface of the first substrate facing away from the first bonding layer, and/or applying the slurry for the second bonding layer onto a surface of the second substrate facing away from the first bonding layer, thereby obtaining the separator, wherein if the thickness of the first bonding layer is denoted as T1 and the thickness of the second bonding layer is denoted as T2, the separator satisfies: T1/T2 > 1; and

optionally, the slurry for the first bonding layer comprises the first binder and a filler.

18. A secondary battery, comprising the separator according to any one of claims 1 to 16.

19. An electric device, comprising the secondary battery according to claim 18.

10

14
11
13
12

FIG. 1

10

11
13
12
14

FIG. 2

10

14
11
13
12
14

FIG. 3

**5**

## FIG. 4

5

53

52
52

51

## FIG. 5

FIG. 6

FIG. 7

FIG. 8

FIG. 9

## INTERNATIONAL SEARCH REPORT

| International application No. |
| --- |
| **PCT/CN2023/090389** |

### A. CLASSIFICATION OF SUBJECT MATTER

H01M50/40(2021.01)i; H01M50/449(2021.01)i; H01M50/457(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 隔膜, 隔离膜, 第一, 第二, 基膜, 粘结层, battery, diaphragm, separator, first, second, base film, adhesive layer

### C. DOCUMENTS CONSIDERED TO BE RELEVANT

| Category* | Citation of document, with indication, where appropriate, of the relevant passages | Relevant to claim No. |
| --- | --- | --- |
| X | CN 218586257 U (NINGDE ZHUOGAO NEW MATERIAL TECHNOLOGY CO., LTD.) 07 March 2023 (2023-03-07) <br> description, paragraphs 2, 25-28, and figure 1 | 1-19 |
| X | CN 209169266 U (SHANGHAI ENERGY NEW MATERIALS TECHNOLOGY CO., LTD.) 26 July 2019 (2019-07-26) <br> description, paragraphs 26-55, and figures 1-4 | 1-19 |
| A | CN 114284632 A (NINGDE AMPEREX TECHNOLOGY LTD.) 05 April 2022 (2022-04-05) <br> entire document | 1-19 |
| A | CN 215732079 U (NINGBO YIWEI CHUANGLING LITHIUM BATTERY CO., LTD.) 01 February 2022 (2022-02-01) <br> entire document | 1-19 |
| A | KR 20160076363 A (LG CHEMICAL LTD.) 30 June 2016 (2016-06-30) <br> entire document | 1-19 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 January 2024** | **10 January 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/090389**

| Patent document cited in search report | | | Publication date (day/month/year) | Patent family member(s) | | | Publication date (day/month/year) |
|---|---|---|---|---|---|---|---|
| CN | 218586257 | U | 07 March 2023 | None | | | |
| CN | 209169266 | U | 26 July 2019 | None | | | |
| CN | 114284632 | A | 05 April 2022 | US | 2019319244 | A1 | 17 October 2019 |
| | | | | CN | 110364668 | A | 22 October 2019 |
| | | | | US | 10991927 | B2 | 27 April 2021 |
| | | | | CN | 110364668 | B | 18 January 2022 |
| | | | | CN | 114335889 | A | 12 April 2022 |
| CN | 215732079 | U | 01 February 2022 | None | | | |
| KR | 20160076363 | A | 30 June 2016 | KR | 101900990 | B1 | 20 September 2018 |

Form PCT/ISA/210 (patent family annex) (July 2022)